**Europäisches Patentamt**

**European Patent Office**

**Office européen des brevets**

(19)

(11) Veröffentlichungsnummer: **0 199 186**
**A1**

(12) # EUROPÄISCHE PATENTANMELDUNG

(21) Anmeldenummer: 86104853.6

(22) Anmeldetag: 09.04.86

(51) Int. Cl.⁴: **B 01 D 53/36**

(30) Priorität: 17.04.85 DE 3513810

(43) Veröffentlichungstag der Anmeldung:
29.10.86 Patentblatt 86/44

(84) Benannte Vertragsstaaten:
AT BE CH DE FR LI NL

(71) Anmelder: Linde Aktiengesellschaft
Abraham-Lincoln-Strasse 21
D-6200 Wiesbaden(DE)

(72) Erfinder: Ruppert, Karl, Dipl.-Ing.
Albrecht-Dürer-Strasse 15
D-8000 München 90(DE)

(72) Erfinder: Kliem, Erhard, Dipl.-Ing.
Am Mitterfeld 1b
D-8196 Eurasburg(DE)

(74) Vertreter: Schaefer, Gerhard, Dr.
Linde Aktiengesellschaft Zentrale Patentabteilung
D-8023 Höllriegelskreuth(DE)

(54) Verfahren zur NOX-Entfernung aus einem Abgasstrom.

(57) Es wird ein Verfahren zur $NO_x$-Entfernung aus einem $NO_x$-haltigen Abgasstrom durch katalytische Umsetzung in Gegenwart eines Hilfsfluides beschrieben. Um eine gleichmäßige Verteilung des Hilfsfluides über dem Katalysatorquerschnitt zu erreichen, ohne gleichzeitig die Abgasmenge zu vergrößern, wird vorgeschlagen, von dem Abgasstrom einen Teilstrom absusweigen, mit dem Hilfsfluid zu versetzen und dem Abgasstrom vor der Umsetzung wider zuzumischen. Als Hilfsfluid kommt dabei insbesondere $HN_3$ zum Einsatz. Mit dem erfindungsgemäßen Verfahren wird Energie zur Aufheizung des Abgases eingespart.

EP 0 199 186 A1

0199186

Verfahren zur $NO_x$-Entfernung aus einem Abgasstrom

Die Erfindung betrifft ein Verfahren zur $NO_x$-Entfernung aus einem $NO_x$-haltigen Abgasstrom durch katalytische Umsetzung in Gegenwart eines Hilfsfluides.

Aus der DE-AS 25 12 410 ist beispielsweise bekannt, bei der $NO_x$-Entfernung aus Abgasen von Stickoxid verarbeitenden Anlagen dem Abgas $NH_3$ zuzudosieren und in einem Katalysator $NO_x$ zu $N_2$ und $H_2O$ umzusetzen. Die optimale Temperatur des Abgases vor der Reduktion der Stickoxide liegt dabei etwa zwischen 260°C und 340°C. Um im Abgasstrom eine gute $NH_3$-Verteilung zu erreichen, wird das $NH_3$ einem Luftstrom zugemischt und das Luft/$NH_3$-Gemisch dem Abgas zudosiert.

Der zugemischte Luftstrom hat außer der Verdünnung des $NH_3$ bzw. dessen Verteilung keine Funktion im Entstickungsverfahren. Vielmehr ergibt sich aus der Zumischung von Luft der Nachteil, daß der Luftstrom die Rauchgasmenge vergrößert und unter Aufbringung von enormer Wärmeenergie auf die Rauchgastemperatur aufgeheizt werden muß.

Der vorliegenden Erfindung liegt daher die Aufgabe zugrunde, eine gleichmäßige Verteilung des Hilfsfluids über dem Katalysatorquerschnitt zu erreichen, wobei gleichzeitig die Abgasmenge nicht vergrößert wird und somit Energie zur Aufheizung des Abgases eingespart wird.

Diese Aufgabe wird erfindungsgemäß dadurch gelöst, daß von dem Abgasstrom ein Teilstrom abgezweigt, mit dem Hilfsfluid versetzt und dem Abgasstrom vor der Umsetzung wieder zugemischt wird.

Eine Verdünnung des Hilfsfluids wie $H_2$ oder $NH_3$ vor Zudosierung zu dem Abgasstrom ist grundsätzlich erforderlich, um vor Eintritt in das Katalysatorbett eine gleichmäßige Verteilung des Hilfsfluids über dem Reaktorquerschnitt zu erreichen. Erfindungsgemäß wird diese Verdünnung nunmehr mittels eines Abgasteilstromes durchgeführt. Diese Verfahrensweise bietet den Vorteil, daß sich die Mengenbilanz nicht verändert, die Abgasmenge nicht vergrößert und überdies das Abgas im abgezweigten Teilstrom nicht aufgeheizt werden muß.

Die Aufheizung des Abgases ist dabei meist aus dem Grunde erforderlich, da vor der $NO_x$-Entfernung oftmals eine $SO_2$-Entfernung durchgeführt wird, die bei wesentlich niedrigeren Temperaturen von beispielsweise 0 bis 60°C für eine absorptive $SO_2$-Entfernung stattfindet. Da die katalytische $NO_x$-Entfernung bei Temperaturen zwischen 250°C und 400°C, vorzugsweise 250°C und 350°C erfolgt, ist eine Aufheizung des mäßig warmen Abgases nötig.

Um eine ausreichend gute Verteilung bzw. Verdünnung des Hilfsfluids zu erzielen, genügt es gemäß einer weiteren Ausführungsform des Erfindungsgedankens, wenn 1 bis 50%, vorzugsweise 10 bis 20% des Abgasstromes als Teilstrom abgezweigt werden.

3

0199186

Dieser Abgasteilstrom wird sodann bevorzugt in einer Mischeinrichtung, wie einer Mischstrecke  oder einem Mischtopf mit dem Hilfsfluid vermischt und dem Abgashauptstrom vor der katalytischen Umsetzung zugeführt.

Nach einer weiteren Ausführungsform des erfindungsgemäßen Verfahrens wird der Abgasteilstrom vor Anwärmung des Abgases über ein übliches Regelventil abgezweigt. Dies hat den Vorteil, daß sich die anzuwärmende Abgasmenge verkleinert, wodurch weniger Energie zur Anwärmung aufgewendet werden muß. Allerdings muß das Abgas dabei auf eine etwas höhere Temperatur angewärmt werden, um nach Zumischung des Abgasteilstrom/Hilfsfluid-Gemisches eine Mischtemperatur zu erreichen, die den Anforderungen für die katalytische Umsetzung genügt. Diese Verfahrensweise ist jedoch nur anwendbar, wenn keine Chloride oder Sulfide im Abgas vorhanden sind, wie es beispielsweise bei Erdgasfeuerung der Fall ist.

Alternativ besteht auch die Möglichkeit, das gesamte Abgas anzuwärmen und erst dann einen Teilstrom zur Vermischung mit dem Hilfsfluid abzuzweigen. Nachteilig an dieser Verfahrensführung ist allerdings, daß ein relativ teures Gebläse für hohe Temperaturen eingesetzt werden muß.

Weiters besteht die Möglichkeit, gereinigtes Abgas zur Verdünnung des Hilfsfluids zu verwenden. Dies bietet den Vorteil, daß im Verdünnungsgas kein $NO_x$ mehr vorhanden ist. Bei der katalytischen Umsetzung des $NO_x$ zu $N_2$ wird nicht immer das gesamte, vorhandene $NH_3$ verbraucht. So kann es vorkommen, daß etwas $NH_3$ mit dem gereinigten Abgas ausgetragen wird. Dieser sogenannte $NH_3$-Schlupf kann ausgenützt werden, wenn ein Teilstrom des gereinigten Abgases zur Verdünnung des Hilfsfluids herangezogen wird. Ein weiterer Vorteil ist in der Staubfreiheit des katalytisch umgesetzten Abgases zu sehen.

Auch bei der Verwendung des gereinigten Abgases kann sowohl warmes, also nicht abgekühltes, wie auch abgekühltes Abgas zum Einsatz gelangen. Die Verwendung eines Teilstromes des gereinigten Abgases vor Abkühlung ist wiederum mit dem Nachteil behaftet, daß ein Hochtemperaturgebläse erforderlich ist. Dieser Nachteil entfällt bei Verwendung des gekühlten, gereinigten Abgases, doch muß in diesem Fall der Reaktor mit dem Katalysator etwas größer ausgelegt werden.

Welche der genannten Alternativen zum Einsatz gelangt, hängt von den jeweiligen Anforderungen an das Verfahren ab.

Das erfindungsgemäße Verfahren ist anwendbar zur $NO_x$-Entfernung aus allen $NO_x$-haltigen Abgasen, wie beispielsweise Rauchgas aus Kraftwerken oder Industrieunterfeuerungen.

Im folgenden sei das erfindungsgemäße Verfahren anhand eines schematisch dargestellten Ausführungsbeispiels näher erläutert.

Über Leitung 1 werden 155 000 Nm³/h eines Rauchgases herangeführt und in einem Gebläse 2 auf etwa 1,06 bar gebracht. Das Rauchgas enthält keinen Staub, Ruß, HF und/oder HCl (in vorgeschalteter Anlage vorgereinigt oder grundsätzlich nicht enthalten) und ist von $SO_2$ und $SO_3$ abgereichert. Das Rauchgas hat eine Temperatur von ca. 70°C - 90°C. Es enthält etwa 550 vppm $NO_x$. Der Hauptstrom des Rauchgases, 130 000 Nm³/h, wird über Leitung 6 mit Umschalteinrichtung 5 einem Reaktor 7 zugeleitet.

Der Reaktor 7 ist als doppelflutiger Regenerator ausgebildet. Er weist eine untere Regeneratorfüllung 8, eine Katalysatorschüttung 9 sowie eine obere Regeneratorfüllung 10 auf. Als Regeneratorfüllung sei beispielsweise Keramik-

Schüttgut verwendet.

Im vorliegenden Fall wird das $NO_x$-haltige Rauchgas der Regeneratorfüllung 8 zugeführt und in dieser auf eine Temperatur von 330°C angewärmt. Dem angewärmten Rauchgasstrom wird vor Zuführung zur Katalysatorschüttung 9 über Leitung 11 ein Gemisch bestehend aus $NH_3$ und Rauchgas zugeführt.

Zur Erzeugung dieses $NH_3$/Rauchgas-Gemisches wird ein Teilstrom des Rauchgases über Leitung 12 abgezeigt und in einer Mischstrecke 13 mit $NH_3$ aus Leitung 14 gemischt. Das Gemisch gelangt dann über Leitung 11 mit Schalteinrichtung 15 in den Reaktor 7.

Nach Zumischung des $NH_3$/Rauchgasgemisches wird das Rauchgas mit einer Mischtemperatur von ca. 300°C über die Katalysatorschüttung 9 geführt, in der das $NO_x$ zu 90% zu $N_2$ und $H_2O$ umgesetzt wird, so daß im gereinigten Gas noch ca. 28 vppm $NO_x$ vorhanden sind. Dieser Wert liegt dabei erheblich unter den gesetzlich erlaubten Werten für den maximalen Ausstoß an Stickoxiden in die Atmosphäre.

Das gereinigte Gas gelangt sodann über die kalte Regeneratorschüttung 10, an der es seinen Wärmeinhalt abgibt, und verläßt den Reaktor 7 über Leitung 16 mit einer Temperatur von etwa 120°C. Über Leitung 17 wird das Gas abgegeben.

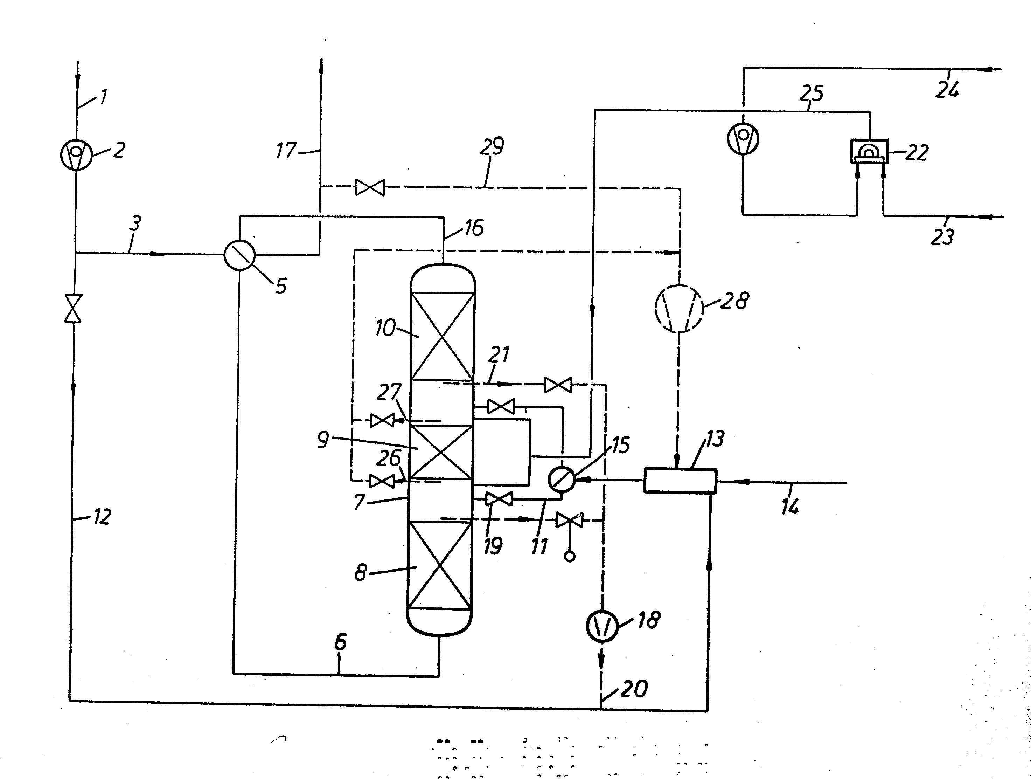

In der Figur ist gestrichelt auch die Alternative angedeutet, von dem angewärmten Rauchgas einen Teilstrom über Leitung 19, 20 abzuziehen, diesen mit $NH_3$ - wie vor beschrieben - in der Mischstrecke 13 zu vermischen und über Leitung 11 wieder in den Reaktor zurückzuführen.

6

Ebenfalls gestrichelt dargestellt ist die Möglichkeit, daß über Leitung 26 bzw. 27 gereinigtes, von dem heißen, gereinigten Rauchgas ein Teilstrom abgezweigt und mittels eines Gebläses 28 (für hohe Temperaturen) der Mischstrecke 13 zugeführt wird, um mit $NH_3$ vermischt und über Leitung 11 wieder in den Reaktor zurückgeführt zu werden.

Überdies ist gestrichelt die Möglichkeit angedeutet, vom gereinigten und gekühlten Rauchgas in Leitung 17 über Leitung 29 einen Teilstrom abzuzweigen und mittels des Gebläses 28 (für normale Temperaturen) wie vor beschrieben, der Mischstrecke 13 zuzuführen.

Nach einer Zeit von etwa 4 Minuten wird die Schalteinrichtung 5 so geschaltet, daß das zu reinigende Rauchgas über Leitung 16 in den Reaktor 7 eintritt und über Leitungen 6, 17 abgezogen wird. Alternativ kann dabei ein Teil des angewärmten Rauchgases über Leitungen 21, 29 abgezogen und mit $NH_3$ vermischt werden. -

Um Wärmeverluste in dem Reaktor auszugleichen, sind überdies Brenner 22 vorgesehen, die über Leitung 23 mit Erdgas und über Leitung 24 mit Luft versorgt werden. Die Brenner können getrennt vom Reaktor 7 angeordnet sein oder direkt in den Rauchgasstrom integriert werden. Im Falle einer getrennten Anordnung entsteht in den Brennern ein heißes Rauchgas, das über Leitung 25 den Regeneratorfüllungen zugeführt werden kann, um diese auf die erforderlichen Temperaturen aufzuheizen, oder, bei der integrierten Anordnung wird die erforderliche Wärmemenge für die Temperaturerhöhung von den Brennern direkt in den Rauchgasstrom übertragen.

Im Vergleich zu der bekannten Verfahrensweise, nach der dem Rauchgas ein $NH_3$/Luft-Gemisch zudosiert wird, wodurch sich die aufzuheizende Gasmenge beträchtlich erhöht, ergibt sich bei dem erfindungsgemäßen Verfahren eine erhebliche Energieeinsparung.

1. Verfahren zur $NO_x$-Entfernung aus einem $NO_x$-haltigen Abgasstrom durch katalytische Umsetzung in Gegenwart eines Hilfsfluides, dadurch gekennzeichnet, daß von dem Abgasstrom ein Teilstrom abgezweigt, mit dem Hilfsfluid versetzt und dem Abgasstrom vor der Umsetzung wieder zugemischt wird.

2. Verfahren nach Anspruch 1, dadurch gekennzeichnet, daß 1 bis 50%, vorzugsweise 10 bis 20% des Abgasstromes als Teilstrom abgezweigt werden.

3. Verfahren nach Anspruch 1 oder 2, dadurch gekennzeichnet, daß der Abgasteilstrom und das Hilfsfluid in einer Mischeinrichtung vermischt werden.

4. Verfahren nach einem der Ansprüche 1 bis 3, dadurch gekennzeichnet, daß der Abgasteilstrom vor Anwärmung des Abgases abgezweigt wird.

5. Verfahren nach einem der Ansprüche 1 bis 3, dadurch gekennzeichnet, daß der Abgasteilstrom nach Anwärmung des Abgases abgezweigt wird.

2 0199186

6. Verfahren nach einem der Ansprüche 1 bis 3, dadurch gekennzeichnet, daß der Abgasteilstrom nach der Umsetzung vor Abkühlung des gereinigten Abgases abgezweigt wird.

7. Verfahren nach einem der Ansprüche 1 bis 3, dadurch gekennzeichnet, daß der Abgasteilstrom nach der Umsetzung nach Abkühlung des gereinigten Abgases abgezweigt wird.

1/1

b199186

**0199186**
Nummer der Anmeldung

EP 86 10 4853

**EUROPÄISCHER RECHERCHENBERICHT**

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,X | WO-A-8 503 645 (SRM SVENSKA ROTOR MASKINER AKTIEBOLAG) <br> * Abbildung 1; Seite 7, Zeile 8 - Seite 8, Zeile 17 * <br><br> --- | 1,3,4 | B 01 D 53/36 |
| A | US-A-4 393 031 (WERNER HENKE) <br> * Abbildung 1; Spalte 3, Zeilen 9-39; Patentanspruch 1 * <br><br> ----- | 1 | |
| | | | RECHERCHIERTE SACHGEBIETE (Int. Cl.4) <br><br> B 01 D 53/00 |

Der vorliegende Recherchenbericht wurde für alle Patentansprüche erstellt

| Recherchenort <br> DEN HAAG | Abschlußdatum der Recherche <br> 30-07-1986 | Prüfer <br> BOGAERTS M.L.M. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82